# FASCICULE DE BREVET EUROPEEN

(11) **EP 2 452 406 B1**
(45) Date de publication et mention de la délivrance du brevet: **03.04.2013**
(21) Numéro de dépôt: 10742181.0
(22) Date de dépôt: 02.07.2010
(51) Int. Cl.: H01R 39/32, H02K 13/04, F02N 11/08

(54) **COLLECTEUR DE MACHINE ELECTRIQUE TOURNANTE POUR VEHICULE AUTOMOBILE**
KOMMUTATOR EINER DREHENDEN ELEKTRISCHEN MASCHINE FÜR EIN FAHRZEUG
COMMUTATOR OF ROTATING ELECTRICAL MACHINE FOR MOTOR VEHICLE

(30) Priorité: 08.07.2009 FR 0954711
(43) Date de publication de la demande: 16.05.2012
(73) Titulaire: Valeo Equipements Electriques Moteur, 94046 Créteil Cedex (FR)
(72) Inventeur: CARBONNEL, Franck, F-38230 Charvieu (FR); RIVOIRE, Jean-Maurice, F-38230 Charvieu (FR)
(86) Numéro de dépôt international: PCT/FR2010/051396
(87) Numéro de publication internationale: WO 2011/004103

(56) Documents cités:
- DE-A1-102005 036 035
- FR-A1- 2 639 163
- GB-A- 2 223 888
- US-A- 4 402 130
- US-A- 4 649 309

## Description

L'invention concerne un collecteur pour une machine électrique tournante, par exemple un démarreur pour véhicule automobile.

On connaît des démarreurs comportant un rotor pouvant tourner autour d'un axe, et comprenant un bobinage pourvu de segments conducteurs insérés dans des encoches de ce rotor et connectés électriquement à un collecteur du démarreur.

Ce collecteur pouvant tourner autour du même axe comporte, d'une part, une pluralité de pièces de contact électrique en cuivre définissant des surfaces de contact sur lesquelles viennent s'appliquer axialement des balais de contact de la machine électrique, et d'autre part, un épaulement sur lequel les segments conducteurs du bobinage de rotor sont fixés, par exemple par soudure.

Il existe des problèmes de tenue mécanique des segments conducteurs sur le collecteur lors du fonctionnement de la machine électrique tournante, et notamment lorsque le rotor et le collecteur tournent autour de l'axe. Pour cette raison, le document US 4649309 propose de maintenir les conducteurs dans les enroches par deformateur.

Il existe un besoin pour remédier aux inconvénients précités.

L'invention vise à proposer un nouveau collecteur pour une machine électrique tournante.

La présente invention a ainsi pour objet un collecteur pour machine électrique tournante, notamment un démarreur de véhicule automobile, le collecteur présentant un axe longitudinal et comportant:
- au moins une pièce de contact électrique, notamment métallique, disposée autour de l'axe longitudinal du collecteur, et définissant une première surface de contact sur laquelle peut venir s'appliquer, notamment axialement, au moins un balai de contact de la machine électrique, cette première surface appartenant à un premier plan,
- un manchon cylindrique s'étendant suivant l'axe longitudinal du collecteur,
- au moins une entaille située à l'extrémité longitudinale de la pièce de contact électrique et dans le manchon cylindrique et définissant au moins une deuxième surface de contact sur laquelle peut venir s'appliquer au moins un segment conducteur d'un rotor de la machine électrique tournante, la deuxième surface de contact appartenant à un deuxième plan disposé radialement plus bas que le premier plan.

Grâce à l'invention, les segments conducteurs du rotor sont agencés sur un faible diamètre du collecteur, ce qui permet, grâce à une faible inertie, de diminuer les effets du phénomène de centrifugation lorsque le collecteur tourne autour de son axe, améliorant ainsi la tenue mécanique des segments conducteurs sur ce collecteur, et donc la fiabilité de la machine.

En outre, contrairement au collecteur de l'état de la technique, le collecteur selon l'invention ne présente pas d'épaulement, ce qui permet d'économiser de la matière, notamment du cuivre, et ainsi de réduire le coût de ce collecteur.

De préférence, le collecteur peut comporter autant de pièces de contact électrique que d'entailles.

De cette manière, chaque segment conducteur du rotor peut être connecté électriquement à une pièce de contact électrique associée.

Selon un exemple de mise en oeuvre de l'invention; l'entaille peut être réalisée à une extrémité du collecteur, parallèlement à l'axe longitudinal.

Selon un autre exemple de mise en oeuvre de l'invention, l'entaille peut présenter une forme au moins partiellement hémisphérique.

Cette forme hémisphérique de l'entaille peut avoir l'avantage de s'adapter relativement précisément à une forme du segment conducteur, lorsque que celui-ci à la forme d'un fil sensiblement rond.

En variante, l'entaille peut présenter deux bords radiaux sensiblement droits et un fond.

Le fond de l'entaille peut avoir un profil droit, notamment plat, ou en variante un profil cylindrique.

Une entaille à bords radiaux droits et fond plat peut avantageusement s'adapter relativement précisément à une forme du segment conducteur, lorsque que celui-ci à la forme d'un fil sensiblement rectangulaire.

Dans tous les cas, l'entaille peut présenter un fond définissant au moins partiellement la deuxième surface de contact entre le segment conducteur et le collecteur.

De manière avantageuse, l'entaille permet de définir une surface d'interface entre le collecteur et le segment conducteur plus grande que celle des collecteurs de l'état de la technique.

En outre, grâce à l'invention, l'entaille permet de définir un guide pour garantir la mise en place suivant un bon positionnement du segment conducteur dans cette entaille.

Ainsi, le procédé de fabrication de la machine peut être simplifié, et la fiabilité de la machine améliorée.

Selon un exemple de mise en oeuvre de l'invention, l'entaille peut être réalisée dans le collecteur par fraisage, notamment radial, par exemple avec une fraise scie.

En variante, l'entaille peut être réalisée dans le collecteur par forage axial.

Selon un exemple de mise en oeuvre de l'invention, le segment conducteur peut être fixé, notamment par soudure, sur la deuxième surface de contact dans l'entaille.

En outre, le segment conducteur peut être soudé par ajout de matière, notamment grâce à un étamage, sur cette deuxième surface de contact.

L'invention a également pour objet une machine électrique tournante, notamment un démarreur pour véhicule automobile, comportant un rotor comprenant un bobinage pourvu de segments conducteurs insérés dans des encoches de ce rotor et connectés électriquement à un collecteur tel que décrit ci-dessus.

Selon un exemple de mise en oeuvre de l'invention, au moins une entaille peut être apte à recevoir un segment conducteur inférieur sur sa deuxième surface de contact et au moins un segment conducteur supérieur disposé sur le segment conducteur inférieur.

De préférence, le segment conducteur supérieur peut être fixé, notamment par soudure avec ou sans étamage, sur le segment conducteur inférieur.

L'invention a enfin pour objet un procédé de fabrication d'une machine électrique tournante telle que définie ci-dessus, le procédé comportant les étapes suivantes:
- insérer au moins le segment conducteur inférieur dans l'entaille,
- fixer, notamment par soudure avec ou sans étamage, ce segment conducteur inférieur dans l'entaille.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, une machine électrique tournante conforme à un mode de réalisation de l'invention,
- la figure 2 représente, schématiquement et partiellement, des segments conducteurs avant montage sur un collecteur de la machine de la figure 1,
- les figures 3 et 4 représentent, schématiquement et partiellement, respectivement en coupe longitudinale et transversale, le collecteur de la figure 2 selon un exemple de mise en oeuvre de l'invention, et
- les figures 5 et 6 représentent, schématiquement et partiellement, en coupe transversale, un collecteur de la machine de la figure selon deux autres exemples de mise en oeuvre de l'invention.

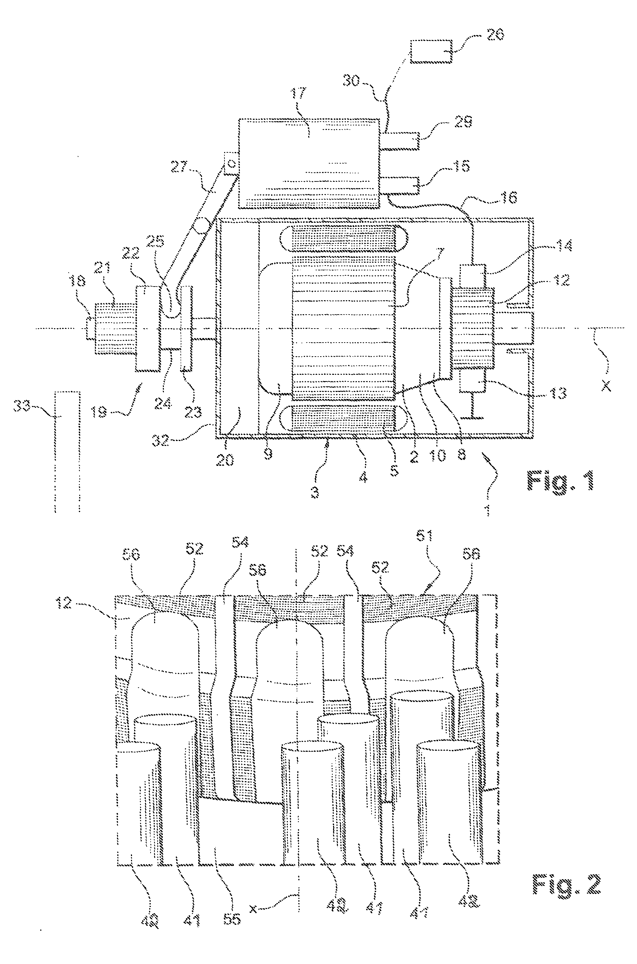

On a représenté sur la figure 1 une machine électrique tournante formant un démarreur 1 pour moteur à combustion interne de véhicule automobile.

Ce démarreur 1 comprend, d'une part, un rotor 2, encore appelé induit, pouvant tourner autour d'un axe longitudinal X, et d'autre part, un stator 3, encore appelé inducteur, autour du rotor 2.

Ce stator 3 comporte une culasse 4 portant une pluralité d'aimants permanents 5.

Le rotor 2 comporte un corps de rotor 7 disposé au droit des aimants 5 du stator 3, et un bobinage d'induit 8 enroulé dans des encoches du corps de rotor 7.

Le démarreur 1 peut être du type six pôles aimants par exemple.

En variante, le stator peut comporter un bobinage à la place des aimants.

Le bobinage 8 comporte une pluralité de segments conducteurs 40 (représentés sur la figure 2) formant, de part et d'autre du corps de rotor 7, un chignon avant 9 et un chignon arrière 10.

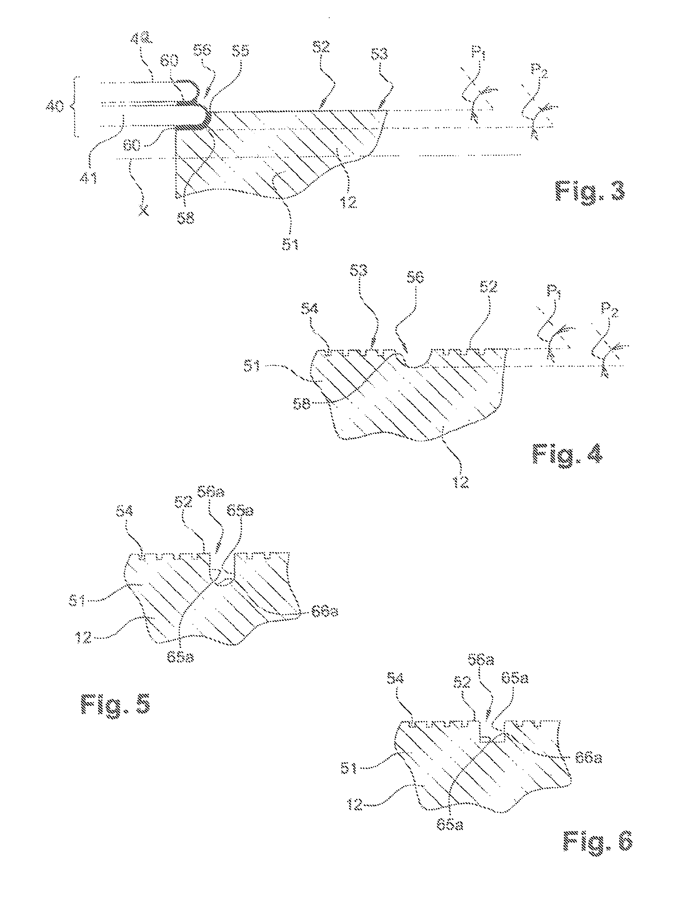

Le rotor 2 est pourvu, à l'arrière, d'un collecteur 12 comprenant une pluralité de pièces de contact 52 (représentés sur la figure 3) connectées électriquement aux segments conducteurs 40, formés dans l'exemple considéré par des fils sensiblement ronds du bobinage d'induit 8.

Ce collecteur 12 peut tourner autour de l'axe longitudinal X.

La connexion mécanique entre ces fils du bobinage d'induit 8 et les pièces de contact du collecteur 12 sera décrite plus en détails ci-dessous, en référence aux figures 2 et 3.

Un groupe de balais 13 et 14 est prévu pour l'alimentation électrique du bobinage 8, l'un des balais 13 étant relié à la masse du dispositif 1 et un autre des balais 14 étant relié à une borne électrique 15 d'un contacteur 17 via un fil 16. Les balais sont par exemple au nombre de quatre.

Les balais 13 et 14 viennent frotter sur le collecteur 12 lorsque le rotor 2 est en rotation.

Les balais 13 et 14 sont réalisés par exemple à base de carbone.

Le démarreur 1 comporte en outre un ensemble lanceur 19 monté de manière coulissante sur un arbre d'entraînement 18 et pouvant être entraîné en rotation autour de l'axe X par le rotor 2.

Un ensemble réducteur de vitesses 20 peut être interposé entre le rotor 2 et l'arbre d'entraînement 18, de manière connue en soi.

Le lanceur 19 comprend en outre une roue libre 22 et une rondelle poulie 23 définissant entre elles une gorge 24 pour recevoir l'extrémité 25 d'une fourchette 27.

Cette fourchette 27 est réalisée par exemple par moulage d'une matière plastique.

La fourchette 27 est actionnée par le contacteur 17 pour déplacer l'ensemble lanceur 19 par rapport à l'arbre d'entraînement 18, suivant l'axe X, de manière connue en soi.

Le contacteur 17 comprend une borne 29 reliée via un élément de liaison électrique, notamment un fil 30, à une alimentation électrique du véhicule telle qu'une batterie 26.

On va maintenant décrire en référence aux figures 2 à 4 plus en détail le collecteur 12 et la fixation mécanique des segments conducteurs 40 du rotor 2 sur ce collecteur 12.

Le collecteur 12 comporte un manchon cylindrique central 51 s'étendant suivant l'axe X, ainsi qu'une pluralité de pièces de contact 52, réalisées en cuivre dans l'exemple décrit, disposés régulièrement sur la surface extérieure du manchon 51 autour de l'axe X.

Les pièces de contact 52, espacées les unes des autres formant des rainures 54 sur le collecteur 12, définissent des premières surfaces de contact 53 sensiblement planes, parallèles à l'axe X, sur lesquelles peuvent venir s'appliquer axialement les balais de contact 13 et 14 (représentés sur la figure 1).

Chaque première surface de contact 53 appartient à un premier plan P1 associé.

Chaque pièce de contact 52 présente une forme sensiblement plane avec, à une extrémité 55, sur le collecteur 12, des moyens de fixation des segments conducteurs 40 sur ce collecteur 12 formés par une entaille 56.

Le collecteur 12 comporte autant de pièces de contact électrique 52 que d'entailles 56 pour connecter chaque segment conducteur 40 du rotor 2 à une pièce de contact électrique 52 associée.

Ces entailles 56 sont situées sur la surface extérieure du collecteur 12.

Plus particulièrement, les entailles 56 sont situées à l'extrémité longitudinale X (suivant l'axe X) de la pièce de contact électrique 52 et dans le manchon cylindrique 51.Chaque entaille 56 définie une deuxième surface de contact 58 sur laquelle vient s'appliquer un segment conducteur 40 du rotor 2.

Dans l'exemple qui suit, le rotor comprend deux fois plus de segments conducteurs 40 que d'entailles 56 soit autant de bobine de rotor que d'entailles 56. Dans cet exemple, un segment conducteur 40 sur deux vient s'appliquer sur la deuxième surface de contact 58 d'une entaille 56. Dans la suite de la description, les segments conducteurs 40 appliqués sur une des deuxièmes surfaces de contact 58 s'appellent segments conducteurs inférieurs 41, les autres segments conducteurs 40 s'appellent segments supérieurs 42.La connexion des segments supérieurs 42 est expliquée dans la suite de la description.

Chaque deuxième surface de contact 58 appartient à un deuxième plan P2 associé.

Chaque entaille 56 est réalisée, par exemple par fraisage radial de l'extrémité de la pièce de contact 52 associée et du manchon cylindrique 51, parallèlement à l'axe longitudinal X, de manière à ce que chaque deuxième plan P2 soit disposé radialement plus bas que le premier plan P1 associé.

En variante, l'entaille peut être réalisée dans le collecteur par forage axial, ou par frappe à froid ou à chaud.

Dans l'exemple décrit aux figures 2 à 4, l'entaille 56 présente une forme hémisphérique pour s'adapter à une forme ronde du segment conducteur inférieur 41 et pour guider ce segment 41 lors de son insertion dans l'entaille 56 du collecteur 12.

Cette entaille 56 permet d'avoir une grande surface d'interface entre le collecteur 12 et le segment conducteur inférieur 41. Chaque entaille 56 débouche à l'extrémité longitudinale X du collecteur 12.

Le segment conducteur inférieur 41 est fixé par soudure, avec ajout d'étain 60, sur la deuxième surface de contact 58 dans l'entaille 56.

Un segment conducteur supérieur 42 est disposé sur le segment conducteur inférieur 41, ce segment conducteur supérieur 42 étant fixé par soudure, également avec ajout d'étain 60, sur le segment conducteur inférieur 41.

Un ou plusieurs autres segments conducteurs supérieurs 42 peuvent être superposés, notamment par soudure, avec ou sans étamage, sur le segment conducteur supérieur déjà en place sur le collecteur.

Le nombre de segments conducteurs à souder sur le collecteur dépend du nombre de segments conducteurs insérés dans chaque encoche du rotor.

Grâce à l'invention, une connexion mécanique robuste et donc une connexion électrique fiable sont assurées entre les segments conducteurs 40 et le collecteur 12. En effet, chaque bobine comporte d'une part et d'autre un segment conducteur 40 relié électriquement à une pièce de contact électrique 52. En effet, chaque segment conducteur inférieur 41 est relié électriquement à la pièce de contact électrique 52 soit par contact direct avec celle-ci soit par l'étain ajouté lors de la soudure. Chaque segment conducteur supérieur 42 est relié électriquement à la pièce de contact 52 par le biais d'un segment conducteur inférieur 41.

La figure 5 illustre une variante de réalisation de l'entaille des figures 2 à 4.

Dans l'exemple de la figure 5, le collecteur 12 comporte une entaille 56a réalisée dans le manchon cylindrique 51 et à l'extrémité d'une pièce de contact 52.

Cette entaille 56a présente deux bords radiaux 65a sensiblement droits et un fond 66a ayant un profil cylindrique.

Cette entaille permet d'avoir une grande surface d'interface entre le collecteur 12 et le segment conducteur inférieur (non représenté).

La figure 6 illustre une autre variante de réalisation de l'entaille des figures 2à4.

Dans l'exemple décrit à la figure 6, le collecteur 12 comporte une entaille 56b réalisée dans le manchon cylindrique 51 et à l'extrémité d'une pièce de contact 52.

Cette entaille 56b présente deux bords radiaux 65b sensiblement droits et un fond 66b ayant un profil plat.

L'entaille 56b peut avantageusement s'adapter à une forme sensiblement rectangulaire du segment conducteur.

Cette entaille permet également d'avoir une grande surface d'interface entre le collecteur 12 et le segment conducteur inférieur (non représenté).

Dans les exemples décrits aux figures 5 et 6, le fond de l'entaille définit au moins partiellement la deuxième surface de contact entre le segment conducteur et le collecteur, et cette deuxième surface de contact appartient à un plan situé radialement plus bas que le plan comprenant la première surface de contact définie par la pièce de contact électrique associée.

Selon un exemple non représenté de mise en oeuvre de l'invention, le collecteur comporte des entailles ayant différentes formes, choisies par exemple entre les formes décrites aux figures 2 à 6, autour du collecteur 12.

## Revendications

1. Collecteur (12) pour machine électrique tournante, notamment un démarreur de véhicule automobile, le collecteur (12) présentant un axe longitudinal (X) et comportant:
- au moins une pièce de contact électrique (52), notamment métallique, disposée autour de l'axe longitudinal (X) du collecteur (12), et définissant une première surface de contact (53) sur laquelle peut venir s'appliquer, notamment axialement, au moins un balai de contact (13, 14) de la machine électrique (1), cette première surface (53) appartenant à un premier plan (P1).
- un manchon cylindrique (51) s'étendant suivant l'axe longitudinal (X) du collecteur (12),
- au moins une entaille (56) située à l'extrémité longitudinale (X) de la pièce de contact électrique (52) et dans le manchon cylindrique (51) et définissant au moins une deuxième surface de contact (58) sur laquelle peut venir s'appliquer au moins un segment conducteur (40) d'un rotor (2) de la machine électrique tournante (1), la deuxième surface de contact (58) appartenant à un deuxième plan (P2) disposé radialement plus bas que le premier plan (P1).

2. Collecteur (12) selon la revendication précédente, **caractérisé par le fait qu'**il comporte autant de pièces de contact électrique (52) que d'entailles (56).

3. Collecteur (12) selon l'une des revendications précédentes, **caractérisé par le fait que** l'entaille (56) est réalisée à une extrémité (55) du collecteur (12), parallèlement l'axe longitudinal (X).

4. Collecteur (12) selon l'une quelconque des revendications précédentes, **caractérisé par le fait que** l'entaille (56) présente une forme au moins partiellement hémisphérique.

5. Collecteur (12) selon l'une quelconque des revendications 1 à 3, **caractérisé par le fait que** l'entaille (56) présente deux bords radiaux (65) sensiblement droits et un fond (66).

6. Collecteur (12) selon la revendication précédente, **caractérisé par le fait que** le fond (66b) de l'entaille (56b) a un profil droit.

7. Collecteur (12) selon la revendication 5, **caractérisé par le fait que** le fond (66a) de l'entaille (56a) a un profil cylindrique.

8. Collecteur (12) selon l'une quelconque des revendications précédentes, **caractérisé par le fait que** l'entaille (56) est réalisée dans le collecteur (12) par fraisage, notamment radial, par exemple avec une fraise scie.

9. Collecteur (12) selon l'une quelconque des revendications 1 à 6, **caractérisé par le fait que** l'entaille (56) est réalisée dans le collecteur (12) par frappe, à froid ou à chaud.

10. Collecteur (12) selon l'une quelconque des revendications précédentes, **caractérisé par le fait que** le segment conducteur (40) est fixé, notamment par soudure, sur la deuxième surface de contact (58) dans l'entaille (56).

11. Collecteur (12) selon la revendication précédente, **caractérisé par le fait que** le segment conducteur (40) est soudé par ajout de matière, notamment grâce à un étamage, sur cette deuxième surface de contact (58).

12. Machine électrique tournante (1), notamment démarreur pour véhicule automobile, comportant :
- un rotor (2) comprenant un bobinage (8) pourvu de segments conducteurs (41, 42) insérés dans des encoches de ce rotor (2),
- un collecteur (12) selon l'une quelconque des revendications précédentes, et
dans lequel chacun des segments conducteurs (41, 42) est connecté électriquement au collecteur (12) de cette machine (1) en étant fixé dans une entaille (56) du collecteur (12)..

13. Machine (1) selon la revendication précédente, **caractérisé par le fait qu'**au moins une entaille (56) est apte à recevoir un segment conducteur inférieur (41) sur sa deuxième surface de contact (58) et au moins un segment conducteur supérieur (42) disposé sur le segment conducteur inférieur (41).

14. Machine (1) selon la revendication précédente, **caractérisé par** le fait le segment conducteur supérieur (42) est fixé notamment par soudure avec ou sans étamage, sur le segment conducteur inférieur (51).

15. Procédé de fabrication d'une machine électrique tournante (1) selon l'une des revendications 12 à 14, le procédé comportant les étapes suivantes:
- insérer au moins le segment conducteur inférieur (41) dans l'entaille (56),
- fixer, notamment par soudure avec ou sans étamage, ce segment conducteur inférieur (41) dans l'entaille (56).

## Claims

1. Commutator (12) for rotary electrical machine, notably motor vehicle starter motor, the commutator (12) having a longitudinal axis (X) and comprising:
- at least one electrical contact piece (52), notably of metal, arranged around the longitudinal axis (X) of the commutator (12) and defining a first contact surface (53) against which there may press, notably axially, at least one contact brush (13, 14) of the electrical machine (1), this first surface (53) belonging to a first plane (P1),
- a cylindrical sleeve (51) extending along the longitudinal axis (X) of the commutator (12),
- at least one cut (56) situated at the longitudinal end (X) of the electrical contact piece (52) and in the cylindrical sleeve (51) and defining at least one second contact surface (58) against which at least one conducting segment (40) of a rotor (2) of the rotary electrical machine (1) can press, the second contact surface (58) belonging to a second plane (P2) positioned radially further down than the first plane (P1).

2. Commutator (12) according to the preceding claim, **characterized in that** it comprises as many electrical contact pieces (52) as it does cuts (56).

3. Commutator (12) according to either one of the preceding claims, **characterized in that** the cut (56) is made at one end (55) of the commutator (12), parallel to the longitudinal axis (X).

4. Commutator (12) according to any one of the preceding claims, **characterized in that** the cut (56) is of at least partially hemispherical shape.

5. Commutator (12) according to any one of Claims 1 to 3, **characterized in that** the cut (56) has two substantially straight radial edges (65) and a bottom (66).

6. Commutator (12) according to the preceding claim, **characterized in that** the bottom (66b) of the cut (56b) has a straight profile.

7. Commutator (12) according to Claim 5, **characterized in that** the bottom (66a) of the cut (56a) has a cylindrical profile.

8. Commutator (12) according to any one of the preceding claims, **characterized in that** the cut (56) is made in the commutator (12) by milling, notably radial milling, for example using a slitting saw.

9. Commutator (12) according to any one of Claims 1 to 6, **characterized in that** the cut (56) is made in the commutator (12) by cold heading or hot forming.

10. Commutator (12) according to any one of the preceding claims, **characterized in that** the conducting segment (40) is fixed, notably by soldering, to the second contact surface (58) in the cut (56).

11. Commutator (12) according to the preceding claim, **characterized in that** the conducting segment (40) is welded with the addition of material, notably using tinning, on this second contact surface (58).

12. Rotary electrical machine (1), notably automotive vehicle starter motor, comprising:
- a rotor (2) comprising a coil (8) provided with conducting segments (41, 42) inserted into slots of this rotor (2),
- a commutator (12) according to any one of the preceding claims, and
in which each of the conducting segments (41, 42) is electrically connected to the commutator (12) of this machine (1) by being fixed in a cut (56) of the commutator (12).

13. Machine (1) according to the preceding claim, **characterized in that** at least one cut (56) is able to accommodate a lower conducting segment (41) on its second contact surface (58) and at least one upper conducting segment (42) positioned on the lower conducting segment (41).

14. Machine (1) according to the preceding claim, **characterized in that** the upper conducting segment (42) is fixed notably by soldering, with or without tinning, to the lower conducting segment (51).

15. Method of manufacturing a rotary electrical machine (1) according to one of Claims 12 to 14, the method comprising the following steps:
- inserting at least the lower conducting segment (41) into the cut (56),
- fixing this lower conducting segment (41) into the cut (56), notably by soldering with or without tinning.

## Patentansprüche

1. Kommutator (12) für eine drehende elektrische Maschine, insbesondere einen Anlasser eines Kraftfahrzeugs, wobei der Kommutator (12) eine Längsachse (X) hat und aufweist:
- mindestens ein insbesondere metallisches elektrisches Kontaktbauteil (52), das um die Längsachse (X) des Kommutators (12) herum angeordnet ist und eine erste Kontaktfläche (53) definiert, auf die sich insbesondere axial mindestens eine Kontaktbürste (13, 14) der elektrischen Maschine (1) auflegen kann, wobei diese erste Fläche (53) zu einer ersten Ebene (P1) gehört,
- eine zylindrische Muffe (51), die sich gemäß der Längsachse (X) des Kommutators (12) erstreckt,
- mindestens ein Einschnitt (56), der sich am Längsende (X) des elektrischen Kontaktbauteils (52) und in der zylindrischen Muffe (51) befindet und mindestens eine zweite Kontaktfläche (58) definiert, auf die sich mindestens ein leitendes Segment (40) eines Rotors (2) der drehenden elektrischen Maschine (1) auflegen kann, wobei die zweite Kontaktfläche (58) zu einer zweiten Ebene (P2) gehört, die radial tiefer als die erste Ebene (P1) angeordnet ist.

2. Kommutator (12) nach dem vorhergehenden Anspruch, **dadurch gekennzeichnet, dass** er ebenso viele elektrische Kontaktbauteile (52) wie Einschnitte (56) aufweist.

3. Kommutator (12) nach einem der vorhergehenden Ansprüche, **dadurch gekennzeichnet, dass** der Einschnitt (56) an einem Ende (55) des Kommutators (12) parallel zur Längsachse (X) hergestellt ist.

4. Kommutator (12) nach einem der vorhergehenden Ansprüche, **dadurch gekennzeichnet, dass** der Einschnitt (56) eine zumindest teilweise halbkugelförmige Form aufweist.

5. Kommutator (12) nach einem der Ansprüche 1 bis 3, **dadurch gekennzeichnet, dass** der Einschnitt (56) zwei im Wesentlichen gerade radiale Ränder (65) und einen Boden (66) aufweist.

6. Kommutator (12) nach dem vorhergehenden Anspruch, **dadurch gekennzeichnet, dass** der Boden (66b) des Einschnitts (56b) ein gerades Profil hat.

7. Kommutator (12) nach Anspruch 5, **dadurch gekennzeichnet, dass** der Boden (66a) des Einschnitts (56a) ein zylindrisches Profil hat.

8. Kommutator (12) nach einem der vorhergehenden Ansprüche, **dadurch gekennzeichnet, dass** der Einschnitt (56) im Kommutator (12) durch insbesondere radiales Fräsen, zum Beispiel mit einem Schlitzfräser, hergestellt wird.

9. Kommutator (12) nach einem der Ansprüche 1 bis 6, **dadurch gekennzeichnet, dass** der Einschnitt (56) im Kommutator (12) durch Kalt- oder Heißumformen hergestellt wird.

10. Kommutator (12) nach einem der vorhergehenden Ansprüche, **dadurch gekennzeichnet, dass** das leitende Segment (40) insbesondere durch Schweißen an der zweiten Kontaktfläche (58) im Einschnitt (56) befestigt wird.

11. Kommutator (12) nach dem vorhergehenden Anspruch, **dadurch gekennzeichnet, dass** das leitende Segment (40) durch Materialzugabe, insbesondere mit Hilfe einer Verzinnung, auf diese zweite Kontaktfläche (58) geschweißt wird.

12. Drehende elektrische Maschine (1), insbesondere Anlasser für ein Kraftfahrzeug, die aufweist:
- einen Rotor (2), der eine Wicklung (8) enthält, die mit leitenden Segmenten (41, 42) versehen ist, welche in Kerben dieses Rotors (2) eingefügt sind,
- einen Kommutator (12) nach einem der vorhergehenden Ansprüche, und
bei der jedes der leitenden Segmente (41, 42) mit dem Kommutator (12) dieser Maschine (1) elektrisch verbunden ist, indem es in einem Einschnitt (56) des Kommutators (12) befestigt ist.

13. Maschine (1) nach dem vorhergehenden Anspruch, **dadurch gekennzeichnet, dass** mindestens ein Einschnitt (56) ein unteres leitendes Segment (41) auf seiner zweiten Kontaktfläche (58) und mindestens ein oberes leitendes Segment (42) aufnehmen kann, das auf dem unteren leitenden Segment (41) angeordnet ist.

14. Maschine (1) nach dem vorhergehenden Anspruch, **dadurch gekennzeichnet, dass** das obere Segment (42) insbesondere durch Schweißen mit oder ohne Verzinnung an dem unteren leitenden Segment (51) befestigt ist.

15. Verfahren zur Herstellung einer drehenden elektrischen Maschine (1) nach einem der Ansprüche 12 bis 14, wobei das Verfahren die folgenden Schritte aufweist:
- Einfügen mindestens des unteren leitenden Segments (41) in den Einschnitt (56),
- Befestigen, insbesondere durch Schweißen mit oder ohne Verzinnung, dieses unteren leitenden Segments (41) im Einschnitt (56).
